# EUROPÄISCHE PATENTANMELDUNG

(11) **EP 1 578 001 A1**
(43) Veröffentlichungstag der Anmeldung: **21.09.2005**
(21) Anmeldenummer: 04006709.2
(22) Anmeldetag: 19.03.2004
(51) Int. Cl.: H02K 1/17, H02K 1/18

(54) **Elektromotor mit am Innenumfang des Motorgehäuses fixierten Magnetschalen**

(71) Anmelder: SIEMENS AKTIENGESELLSCHAFT, 80333 München (DE)
(72) Erfinder: Drexlmaier, Thomas, 97072 Würzburg (DE)

(57) **Zusammenfassung**

Die Erfindung betrifft einen Elektromotor, der ein Motorgehäuse und am Innenumfang des Motorgehäuses fixierte Federn aufweist. Die Federn sind zwischen die Stirnflächen der Magnetschalen eingesetzt. Jede Feder weist zwei Seitenschenkel und einen die Seitenschenkel miteinander verbindenden Grundschenkel auf. Im eingesetzten Zustand sind die Grundschenkel der Federn nach außen gewölbt. Vorzugsweise liegt der mittlere Teil der Grundschenkel jeweils am Innenumfang des Motorgehäuses an.

## Beschreibung

Die Erfindung betrifft einen Elektromotor mit am Innenumfang des Motorgehäuses fixierten Magnetschalen.

Aus der WO 00/74 208 Al ist bereits ein Elektromotor bekannt. Dieser bekannte Elektromotor weist ein Motorgehäuse auf, an dessen Innenumfang Magnetschalen fixiert sind. Zu dieser Fixierung dienen Spannelemente, die zwischen die tangentialen Stirnflächen benachbarter Magnetschalen eingedrückt sind. Bei diesen Spannelementen handelt es sich um Bügel-Steckfedern, die im eingedrückten Zustand ein M-förmiges Aussehen haben. Dabei stehen die beiden Seitenschenkel der Bügel-Steckfedern mit der jeweils benachbarten Magnetschale in Verbindung und drücken diese an den Innenumfang des Motorgehäuses. Der die Seitenschenkel miteinander verbindende Grundschenkel verläuft im eingedrückten Zustand der jeweiligen Bügel-Steckfeder nach innen gewölbt, so dass der mittlere Teil des Bogens vom Innenumfang des Motorgehäuses weiter entfernt ist als die äußeren Bereiche des Bogens. Weiterhin ist die Bügel-Steckfeder im eingedrückten Zustand jeweils im Übergangsbereich zwischen einem Seitenschenkel und dem Grundschenkel mit dem Innenumfang des Motorgehäuses kontaktiert. Durch das Eindrücken derartiger Federn zwischen die Magnetschalen erhalten die Federn eine Vorspannung, die die Magnetschalen an den Innenumfang des Motorgehäuses drückt. Während des Betriebs eines derartigen Motors wirken jedoch Magnetkräfte auf die Bügel-Steckfedern, wodurch diese zur Schwingungen in Radialrichtung angeregt werden. Dadurch kann es jeweils an den Kontaktflächen der Federn zum Motorgehäuse zu einer störenden Geräuschentwicklung kommen. Deshalb sind die aus der WO 00/74 208 A1 bekannten Federn mit einer motorgehäuseseitigen schalldämmenden Beschichtung versehen, insbesondere einer Kunststoffbeschichtung.

Ausgehend von diesem Stand der Technik liegt der Erfindung die Aufgabe zugrunde, einen Elektromotor mit am Innenumfang des Motorgehäuses fixierten Magnetschalen anzugeben, der eine derartige schalldämmende Beschichtung nicht benötigt.

Diese Aufgabe wird durch einen Elektromotor mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen neben einer Einsparung einer schalldämmenden Beschichtung der die Magnetschalen fixierenden Federn darin, dass die beim beanspruchten Elektromotor verwendeten Federn weniger Materialeinsatz benötigen als die bekannten Federn und dass die Einbaugenauigkeit der Magnetschalen im Vergleich zum bekannten Motor erhöht ist, da eine Verwendung von Federn gemäß der Erfindung weniger Symmetrieabweichungen zulässt.

Weitere vorteilhafte Eigenschaften der Erfindung ergeben sich aus deren beispielhafter Erläuterung anhand der Figuren. Es zeigt:
- Figur 1: eine Schnittdarstellung zur Veranschaulichung eines Elektromotors gemäß der Erfindung,
- Figur 2: eine Skizze einer beim Elektromotor gemäß der Figur 1 verwendeten Feder im nichteingesetzten Zustand und
- Figur 3: eine Skizze einer beim Elektromotor gemäß der Figur 1 verwendeten Feder im eingesetzten Zustand.

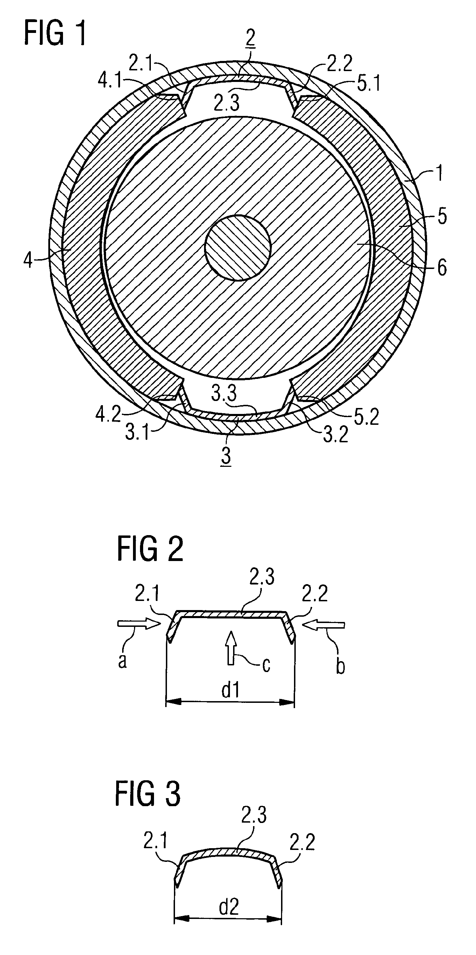

Die Figur 1 zeigt eine Schnittdarstellung eines zweipoligen dauermagneterregten Elektromotors mit am Innenumfang seines Motorgehäuses 1 fixierten Magnetschalen 4 und 5. Zur Lagefixierung dieser Magnetschalen dienen Spannelemente 2 und 3.

Bei diesen Spannelementen handelt es sich um Bügel-Steckfedern. Die Bügel-Steckfeder 2 weist zwei Seitenschenkel 2.1 und 2.2 sowie einen diese Seitenschenkel miteinander verbindenden Grundschenkel 2.3 auf. Die Bügel-Steckfeder 3 weist zwei Seitenschenkel 3.1 und 3.2 sowie einen diese Seitenschenkel miteinander verbindenden Grundschenkel 3.3 auf.

Die Bügel-Steckfedern 2 und 3 sind jeweils derart in die Zwischenräume zwischen jeweils zwei benachbarten Stirnflächen der Magnetschalen 4 und 5 radial eingedrückt, dass sie mit den radial nach innen weisenden freien Enden ihrer Seitenschenkel 2.1., 2.2, 3.1 und 3.2 gegen die Stirnflächen 4.1, 5.1, 4.2 und 5.2 der Magnetschalen 4 und 5 gedrückt werden. Dabei sind die Grundschenkel 2.3 und 3.3 der Federn 2 und 3 derart elastisch gespannt, dass sie den Andruck der Seitenschenkel 2.1, 2.2, 3.1 und 3.2 der Federn an die Stirnflächen der Magnetschalen 4 und 5 und damit den Andruck der Magnetschalen 4 und 5 an den Innenumfang des Motorgehäuses 1 verstärken.

Die Grundschenkel 2.3 und 3.3 der Federn 2 und 3 verlaufen im eingedrückten Zustand der jeweiligen Feder im wesentlichen parallel zum Innenumfang des Motorgehäuses 1 und liegen vorzugsweise formschlüssig an diesem an. Folglich sind beim erfindungsgemäßen Elektromotor die Grundschenkel 2.3 und 3.3 der Federn im Unterschied zum Stand der Technik gemäß der WO 00/74 208 Al nach radial außen gewölbt. Vorzugsweise liegt der mittlere Teil des Bogens, den der jeweilige Grundschenkel beschreibt, unmittelbar am Innenumfang des Motorgehäuses 1 an. Dies gilt auch für die den mittleren Teil des Grundschenkels benachbarten Bereiche des Grundschenkels. Erst in der Nähe der Übergangsbereiche zwischen dem Grundschenkel und den Seitenschenkeln kann gegebenenfalls ein geringfügiger Abstand zwischen dem Innenumfang des Motorgehäuses und der jeweiligen Feder bestehen. Insgesamt liegt - wie bereits ausgeführt - ein weitgehend formschlüssiges Anliegen des jeweiligen Grundschenkels 2.3 bzw. 3.3 am Innenumfang des Motorgehäuses 1 vor.

Der Abstand des jeweiligen Grundschenkels 2.3 bzw. 3.3 vom Rotor 6 des Elektromotors ist vergleichsweise groß. Aus diesem Grund können die im Betrieb des Motors auftretenden Magnetkräfte wegen des vergleichsweise großen Abstands der Grundschenkel vom Rotor die Federn nur noch in sehr begrenztem Maß zum Schwingen anregen, so dass ein Entstehen von Störgeräuschen nicht mehr auftritt. Dieser gewünschter Effekt wird noch dadurch verstärkt, dass die Grundschenkel über einen vergleichsweise großen Bereich mit bleibender Vorspannung formschlüssig am Innenumfang des Motorgehäuses 1 anliegen. Die beim Betreiben des Motors auftretenden Magnetkräfte reichen nicht mehr aus, die Federn in Schwingung zu versetzen, da die Vorspannkräfte der Federn gegen das Motorgehäuse größer sind als die genannten Magnetkräfte. Einer geräuschdämmenden Beschichtung der Federn bedarf es nicht.

Die Federn bestehen aus einfachem Federstahl und werden mittels einer Stanzbiegemaschine aus einem langen Stahlband hergestellt.

Die Fixierung der Federn zusammen mit den Magnetschalen am Motorgehäuse wird unterstützt, wenn die Stirnflächen der Magnetschalen derart verlaufen, dass der radial innere tangentiale Abstand kleiner ist als der radial äußere motorgehäuseseitige Abstand, da dadurch eine zusätzliche, in Richtung auf das Motorgehäuse 1 gerichtete Andruckkraft entsteht.

Die Figur 2 zeigt eine Skizze einer beim Elektromotor gemäß der Figur 1 verwendeten Feder im nicht eingesetztem Zustand, die Figur 3 eine Skizze einer beim Elektromotor gemäß der Figur 1 verwendeten Feder im eingesetzten Zustand. Aus diesen Figuren geht insbesondere hervor, dass bei der nicht eingesetzten Feder der Grundschenkel 2.3 zumindest in etwa geradlinig verläuft und die freien Enden der beiden Seitenschenkel 2.1 und 2.2 einen Abstand d1 voneinander aufweisen. Weiterhin geht aus diesen Figuren hervor, dass bei der eingesetzten Feder - wobei das Einsetzen der Feder durch Ausüben von Druck in Richtung des Pfeiles c und gegebenenfalls der Pfeile a und b erfolgt ist - der Grundschenkel 2.3 einen nach außen gerichteten bogenförmigen Verlauf hat und die freien Enden der beiden Seitenschenkel 2.1 und 2.2 einen Abstand d2 voneinander aufweisen, wobei d2 kleiner als d1 ist.

Ein Elektromotor gemäß der Erfindung kann beispielsweise als Hilfsantrieb in einem Kraftfahrzeug verwendet werden, beispielsweise als Lüfterantrieb in einem Heiz- bzw. Klimagerät.

## Patentansprüche

1. Elektromotor, welcher aufweist:
- ein Motorgehäuse (1),
- am Innenumfang des Motorgehäuses mittels Federn (2, 3) fixierte Magnetschalen (4, 5), wobei
- die Federn zwischen die Stirnflächen (4.1, 5.1; 4.2, 5.2) benachbarter Magnetschalen eingesetzt sind und wobei
- jede Feder zwei Seitenschenkel (2.1, 2.2; 3.1, 3.2) und einen die Seitenschenkel miteinander verbindenden Grundschenkel (2.3, 3.3) aufweist,
**dadurch gekennzeichnet, dass** im eingesetzten Zustand der Federn (2, 3) die Grundschenkel (2.3, 3.3) nach radial außen gewölbt sind.

2. Elektromotor nach Anspruch 1, **dadurch gekennzeichnet, dass** der mittlere Teil der Grundschenkel jeweils am Innenumfang des Motorgehäuses (1) anliegt.

3. Elektromotor nach Anspruch 1 oder 2, **dadurch gekennzeichnet, dass** die Grundschenkel (2.3, 3.3) der Federn jeweils weitgehend formschlüssig am Innenumfang des Motorgehäuses (1) anliegen.

4. Elektromotor nach einem der vorhergehenden Ansprüche, **dadurch gekennzeichnet, dass** die Federn (2, 3) aus einem Stahlband mittels einer Stanzbiegemaschine hergestellte Stahlfedern sind.
